# FASCICULE DE BREVET EUROPEEN

(11) **EP 1 099 580 B1**
(45) Date de publication et mention de la délivrance du brevet: **06.09.2006**
(21) Numéro de dépôt: 00460064.9
(22) Date de dépôt: 10.11.2000
(51) Int. Cl.: B60J 1/20

(54) **Store à enrouleur à moyens d'obturation de la fente de guidage, notamment pour véhicule automobile, et procédé de montage correspondant**
Auf einen Deckel des Führungschlitzes wirkendes Rollo, insbesondere für Autos, und Montageverfahren hierzu
Roller blind working on the cover of the guide slot, particularly for cars, and assembly method therefor

(30) Priorité: 12.11.1999 FR 9914477; 17.03.2000 FR 0003502
(43) Date de publication de la demande: 16.05.2001
(73) Titulaire: WAGON SAS, 79300 Bressuire (FR)
(72) Inventeur: Jolivet, David M., 79300 Bressuire (FR)
(74) Mandataire: Vidon, Patrice

(56) Documents cités:
- DE-A- 19 605 997
- DE-A- 19 835 257
- DE-U- 29 621 563
- GB-A- 2 278 141
- PATENT ABSTRACTS OF JAPAN vol. 1998, no. 04, 31 mars 1998 (1998-03-31) & JP 09 315145 A (ASMO CO LTD), 9 décembre 1997 (1997-12-09)

## Description

Le domaine de l'invention est celui des stores à enrouleur, notamment pour véhicules automobiles. Plus précisément, l'invention concerne des stores destinés à être rapportés sous un élément du véhicule formant support, tel qu'une tablette arrière ou un habillage de porte, afin d'équiper respectivement la lunette arrière ou la fenêtre de la portière latérale de ce véhicule. GB 2 278 141 décrit un store/ tablette arrière pour véhicule selon le préambule des revendications 1 et 13.

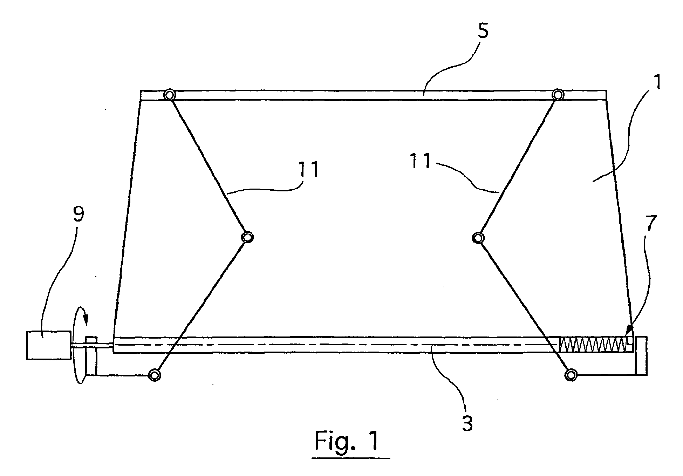

Classiquement, et comme illustré sur la figure 1 jointe, un store à enrouleur comprend un rideau ou toile 1, formant écran en position déployée. L'une des extrémités de cette toile 1 est montée sur un rouleau ou tube d'enroulement 3, mobile en rotation. L'autre extrémité de la toile est munie d'une barre de tirage 5. L'ensemble de ces éléments peut être monté dans un boîtier (non représenté en figure 1), muni d'une fente de guidage au travers de laquelle peut se déplacer la toile 1. En position reployée, la toile est essentiellement enroulée autour du tube d'enroulement 3 et la barre de tirage 5 se trouve donc au voisinage de ce tube.

Dans certains cas, le store est actionné manuellement, et l'utilisateur agit alors sur la barre de tirage, de façon à l'éloigner du tube d'enroulement et à déployer la toile. Le reploiement est alors obtenu par l'action d'un ressort de rappel 7 entraînant le rouleau d'entraînement. Dans d'autres cas, le store est motorisé et présente alors en outre un moteur 9 entraînant la rotation du tube d'enroulement 3 ou le déplacement de biellettes ou leviers de guidage 11 de ladite barre de tirage.

Il apparaît cependant que de la poussière et de petits objets peuvent pénétrer dans le boîtier par la fente de guidage et bloquer ou détériorer l'ensemble du mécanisme. Pour remédier à ce problème, une solution de l'art antérieur consiste à utiliser une barre de tirage suffisamment large pour recouvrir la fente de guidage lorsque la toile est repliée, mais la conception et le fonctionnement du dispositif sont alors plus complexes car la barre de tirage joue un double rôle.

De plus, lorsque la toile a une forme trapézoïdale (comme cela est le cas sur certains modèles de véhicules), la barre de tirage correspondant au petit côté du trapèze, les extrémités de la fente de guidage ne sont pas fermées.

En outre, cette solution est rarement esthétique, ni ergonomique. En effet, lorsque la toile du store n'est pas déployée, il est souhaitable que la tablette arrière ou l'habillage de porte présente l'aspect le plus lisse et le plus plat possible, sans aucun élément faisant saillie.

Par ailleurs, il est souhaitable, notamment dans les véhicules haut de gamme, que la couleur ou l'aspect de la barre de tirage soit la plus proche de celle du revêtement de l'habitacle du véhicule, ou à tout le moins assorti avec ce dernier, et discret. Avec la solution de l'art antérieur, il est en général nécessaire de fabriquer autant de type de stores que d'intérieurs de véhicules existants, ce qui est évidemment beaucoup plus coûteux et complexe à gérer.

En conséquence, l'invention a notamment pour objectif de pallier ces différents inconvénients de l'art antérieur.

Plus précisément, un objectif de l'invention est de fournir un store à enrouleur, et plus généralement une technique de réalisation et de montage correspondants, qui présente un aspect discret, efficace et esthétique par rapport à la garniture intérieure du véhicule, et notamment de l'élément supportant le store (par exemple une tablette arrière ou la garniture d'une portière), en particulier lorsque le store est replié.

En d'autres termes, l'invention a pour objectif de fournir un store présentant de bonnes qualités esthétiques et ergonomiques, notamment par rapport à son support. En particulier, il est souhaitable lorsque la toile n'est pas déployée que l'habillage de porte, ou la tablette arrière, présente un aspect lisse, en éliminant ou limitant le plus possible, les éléments faisant saillie.

Ainsi, un objectif de l'invention est de fournir un store qui soit peu visible, voire invisible, lorsqu'il est replié.

Un autre objectif de l'invention est de permettre une fabrication, un stockage et un montage simples et peu coûteux de tels stores, malgré la contrainte esthétique mentionnée ci-dessus.

L'invention a également pour objectif de fournir un tel store à enrouleur, qui soit fiable, et en particulier qui ne risque pas de se détériorer rapidement (lutte contre les détériorations dues à la poussière ou à la présence d'objets introduits par inadvertance à l'intérieur du boîtier du store...).

Encore un autre objectif de l'invention est de fournir un tel store, qui réduise les nuisances dues au bruit ou aux odeurs.

Ces objectifs, ainsi que d'autres qui apparaîtront par la suite, sont atteints à l'aide d'un store pour véhicule, comprenant une toile d'occultation mobile, sous l'action de moyens d'entraînement, entre une position repliée et une position déployée, ledit store étant monté sous un élément dudit véhicule formant support, ladite toile pouvant circuler, au travers d'une fente ménagée à cet effet dans ledit élément de structure.

Selon l'invention, lesdits moyens d'entraînement de la toile agissent également sur des moyens d'obturation de ladite fente comprenant au moins un élément mobile s'étendant sous, ou à l'intérieur de, l'élément formant support et pouvant prendre au moins deux positions :
- une position d'obturation, dans laquelle ils obturent au moins partiellement ladite fente et dissimulent au moins partiellement lesdits moyens d'entraînement ; et
- une position ouverte, permettant la circulation de ladite toile dans ladite fente,
lesdits moyens d'entraînement de la toile étant conçus de façon que, lors du repliement de ladite toile, ils pénètrent au moins partiellement à l'intérieur dudit élément support et ramènent ledit élément mobile dans ladite position d'obturation.

Ainsi, en position d'obturation, l'approche selon l'invention permet d'empêcher la poussière et des objets fins ou coupants de se glisser à travers la fente de guidage et d'entraîner une détérioration du rideau ou du mécanisme d'enroulement ou des nuisances dues aux bruits ou aux odeurs de ces objets.

Sur le plan esthétique et ergonomique, il est ainsi possible de dissimuler complètement, ou au moins en grande partie, la présence du store et de la barre de tirage, lorsque le store n'est pas déployé.

La mise en mouvement (passage de la position d'obturation à la position ouverte et/ou de la position ouverte à la position d'obturation) ne nécessite pas de moyens et/ou d'action supplémentaires, par rapport aux moyens habituels assurant le mouvement de la toile, puisque ce sont les moyens d'entraînement de la toile (par exemple une barre de tirage, des biellettes ou un piston) qui entraînent les moyens d'obturation.

On obtient, selon l'invention, une surface ne présentant aucun élément proéminent, lorsque le store est reployé, avec les avantages esthétiques et ergonomiques évidents que cela procure. En outre, l'étanchéité obtenue peut être très bonne.

De façon avantageuse, ledit élément mobile présente un logement de réception desdits moyens d'entraînement, la présence desdits moyens d'entraînement dans ledit logement assurant le passage dans ladite position d'obturation.

Préférentiellement, et notamment lorsque le store n'est pas motorisé, au moins un élément de préhension (par exemple une poignée ou une languette) reste accessible en position d'obturation, de façon à pouvoir déployer ledit store. Dans ce cas, ladite fente présente avantageusement une découpe ou un logement prévu pour recevoir ledit élément de préhension.

Selon un premier mode de mise en oeuvre, ledit élément mobile peut être monté à rotation sur un axe s'étendant parallèlement à ladite fente. Selon un deuxième mode de mise en oeuvre, cet élément mobile est monté basculant autour d'un axe s'étendant parallèlement à ladite fente.

D'autres mouvements (rotation, basculement, coulissement, décalage, guidage,...) et combinaisons de mouvements peuvent bien sûr être mis en oeuvre.

Dans les différents modes de réalisation décrits, il est à noter que le mode de repliement du store peut être quelconque (par exemple un pliage, éventuellement suivant des plis préformés). Selon une approche avantageuse, le store comprend, de façon classique en soi, un tube d'enroulement, sur lequel est monté ladite toile.

Dans ce cas, et selon une première approche, ledit tube d'enroulement s'étend sensiblement à distance dudit élément mobile, à l'intérieur dudit élément de structure.

On distingue alors d'une part les moyens d'enroulement du store, éventuellement dans un boîtier prévu à cet effet, montés à un emplacement adéquat à l'intérieur de la portière, et d'autre part les moyens d'obturation.

Selon une seconde approche, on prévoit avantageusement que ledit tube d'enroulement s'étend à l'intérieur dudit élément mobile. On obtient ainsi un ensemble compact et simple à mettre en oeuvre.

Préférentiellement, l'axe dudit tube d'enroulement est alors également l'axe autour duquel s'effectue le mouvement dudit élément mobile.

De façon avantageuse, lesdits moyens d'entraînement comprennent une barre de tirage. Cette dernière peut agir, par contact direct et/ou par l'intermédiaire d'un élément prévu à cet effet.

Comme déjà mentionné, le store selon l'invention peut être manuel. On peut également avantageusement prévoir que le mouvement de ladite toile est motorisé.

L'invention concerne également un élément de véhicule, tel qu'une portière ou une tablette arrière de véhicule, comprenant un store tel que décrit plus ci-dessus.

D'autres caractéristiques et avantages de l'invention apparaîtront plus clairement à la lecture de la description suivante de trois modes de réalisation préférentiels de l'invention, donnés à titre d'exemples illustratifs et non limitatifs, cette description étant faite en faisant référence aux dessins joints, dans lesquels :
- la figure 1 est une vue schématique de face d'un store à enrouleur, de type connu en soi ;
- la figure 2 est une vue schématique d'un premier mode de réalisation de l'invention dans lequel le cache-barre tourne autour de son axe médian ;
- la figure 3 est une vue schématique d'un deuxième mode de réalisation dans lequel le cache-barre pivote autour d'un axe sensiblement opposé au logement par rapport à l'axe médian du cache-barre ;
- les figures 4a et 4b sont des vues schématiques d'un troisième mode de réalisation dans lequel le cache-barre forme un boîtier pour le tube d'enroulement.

Comme expliqué plus haut, l'invention propose de dissimuler, lorsque le store est replié, la barre de tirage et/ou les moyens de guidage correspondants (biellettes, crémaillères, pistons,...). Pour cela, on prévoit des moyens d'obturation de la fente du passage de la toile, qui s'étendent sous cette fente (à l'intérieur et/ou sous le matériau formant le support dans lequel la fente est ménagée).

Bien que le store de l'invention puisse être mis en place en tout emplacement adéquat, on notera qu'il peut notamment équiper une portière ou une tablette arrière d'un véhicule.

Les moyens d'obturation de la fente comprennent donc, selon l'invention, une pièce mobile (appelée par la suite, par simplification "cache-barre de tirage") s'étendant en dessous, ou à l'intérieur, de cet élément de structure.

Comme cela apparaîtra par la suite, il est ainsi possible d'obtenir une finition très discrète (absence de couvercle) et une obturation efficace et esthétique.

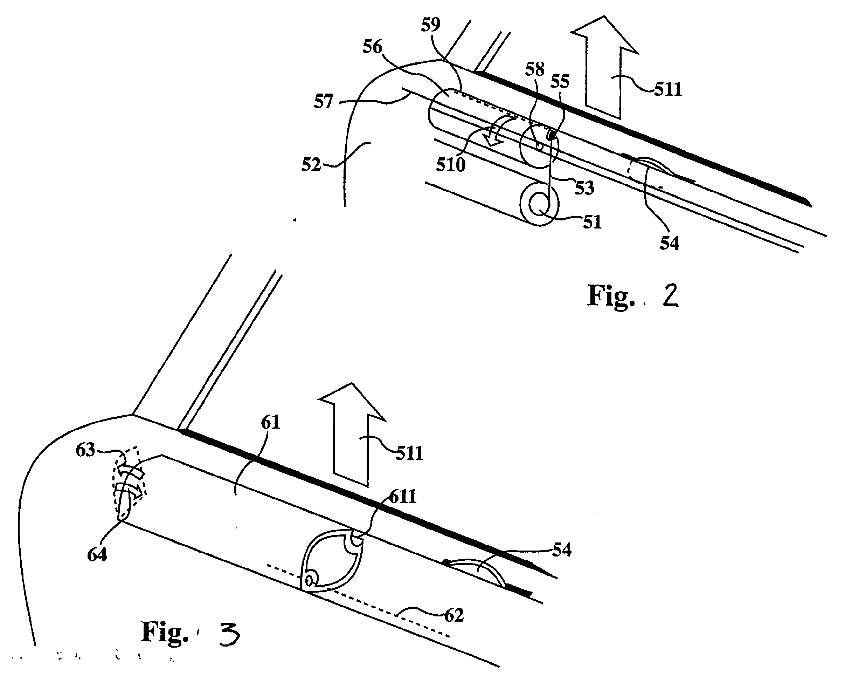

La figure 2 illustre un premier mode de réalisation de cette approche. Classiquement, on a monté un store à enrouleur, symbolisé par son tube d'enroulement 51, à l'intérieur d'une portière 52. Ce tube peut être monté directement sur la structure de la portière, ou dans un boîtier. La technique de l'invention peut permettre de se passer d'un boîtier, puisqu'elle augmente l'étanchéité de l'ensemble.

Le déploiement de la toile 53 est ici manuel, et est obtenu par le tirage de la patte 54, reliée à la barre de tirage 55, elle-même montée à l'extrémité libre de la toile (l'autre extrémité de la toile étant solidaire du tube d'enroulement).

Une portion élargie de la fente constitue un logement pour la patte de tirage. Un tel passage pourrait être constitué de façon similaire sur une extrémité de la fente.

Un objectif de l'invention étant de limiter au maximum les parties faisant saillie à l'extérieur de l'habillage d'une portière ou au-dessus d'une tablette arrière, la patte de tirage 54 est montée sur la barre de tirage 55 de telle sorte qu'elle soit la plus discrète possible lorsque le store est rétracté. Dans le cas où l'entraînement est motorisé, il n'y a plus de nécessité de prévoir une patte (ou tout moyen de préhension équivalente), et il est possible d'obtenir une obturation parfaite de la fente.

Selon l'invention, on a prévu un cache-barre 56, qui se présente ici sous la forme d'un barillet mobile en rotation autour de son axe 57.

Il présente une section essentiellement circulaire, dans laquelle on a ménagé une gorge 58 formant un logement pour la barre de tirage 55.

Le cache-barre peut être un profilé aluminium, dont la surface (au moins la portion visible) aura été traitée par une finition brossée ou anodisée à des fins esthétiques. Plus généralement, la portion visible est avantageusement adaptée (couleur, revêtement,...) au reste du véhicule.

Le cache-barre 56 est monté tournant sur son axe (57) dont les extrémités sont montées de telle sorte que la portion cylindrique du cache-barre affleure les bords de la fente de l'habillage, sous celui-ci.

Considérant une position de départ dans laquelle la toile du store est totalement repliée (et illustré en figure 2), la fente 59 étant obturée par la portion cylindrique du cache-barre 56, la barre de tirage 55 est logée dans la gorge 58.

Pour déployer la toile 53, on tire sur la patte 54 couplée à la barre 55. Le cache-barre 56 opère une rotation (flèche 510), qui ramène la gorge 58 en face de la fente 59, et permet ainsi le passage au travers de cette dernière de la barre de tirage et, à sa suite, de la toile.

Inversement, lors du repliement du store, la toile 53 s'enroule sur le tube d'enroulement 51 sous l'effet de moyens de rappel élastiques (et/ou de moyens motorisés), jusqu'à ce que la barre de tirage 55 se loge à nouveau dans la gorge 58. La toile poursuivant sa course continue à entraîner la barre 55, ce qui provoque la rotation du cache-barre 56.

La fente est alors à nouveau obturée par le cache-barre 56 et la barre de tirage 55 est dissimulée sous l'habillage 52.

Selon les cas, la toile peut circuler à l'extérieur ou à l'intérieur du cache-barre, et éventuellement être guidée par celui-ci.

On peut bien sûr prévoir des butées, ou tout autre moyen de contrôle du mouvement et du placement, pour s'assurer que le cache-barre se positionne de façon adéquate. Il peut par exemple s'agir d'un doigt s'étendant dans le prolongement du cache-barre, et circulant dans une lumière ménagée dans la structure de la portière (ou un système symétrique).

On notera par ailleurs que, a priori, le cache-barre se positionne aisément et automatiquement dans la bonne position lors du déploiement du store. Lors du repliement, l'enroulement doit bien sûr être arrêté dès que le cache-barre est en position d'obturation. Le résultat peut également être obtenu en bloquant la patte de tirage.

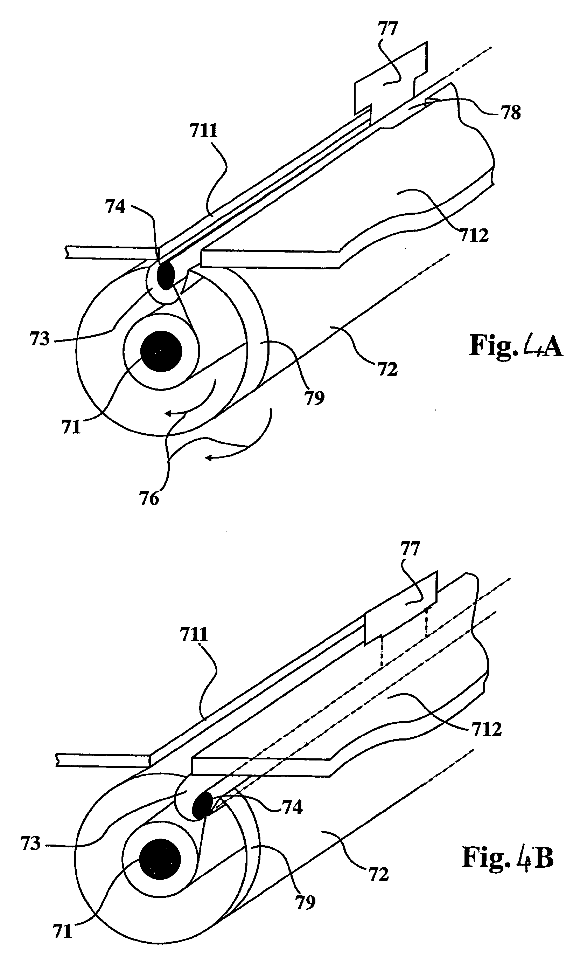

La figure 3 illustre une variante du mode de réalisation de la figure 2, dans laquelle le cache-barre 61 pivote autour d'un axe 62 sensiblement opposé à la gorge 611 par rapport au cache-barre. Il peut également, par exemple, être réalisé sous la forme d'un profilé en aluminium.

L'axe 62 étant déporté d'un côté du cache-barre 61, le rayon de courbure de la surface apparente entre les bords de la fente peut aisément être adaptée à la forme de l'habillage.

Le cache-barre 61 effectue donc un mouvement basculant (flèches 63 et 64), permettant d'obtenir le même résultat que décrit plus haut

On peut encore prévoir d'autres mouvements pour le cache-barre, et notamment un mouvement coulissant, guidé par des rails prévus à cet effet. Plus généralement, les divers mouvements de base (rotation, basculement, coulissement,...) peuvent être combinés, en fonction des besoins.

Par ailleurs, la forme du cache-barre peut bien sûr être adaptée, les contraintes principales étant simplement le logement de la barre de tirage et la zone visible d'obturation. Le profil peut notamment prendre en compte le guidage de la toile (par exemple pour éviter tout frottement sur celle-ci).

Selon un autre aspect de l'invention, on peut prévoir que le cache-barre forme également le boîtier du store, ou à tout le moins le logement du rouleau d'enroulement. Ce mode de réalisation est illustré par les figures 4a (position (encore) ouverte) et 4b (position obturée).

Le rouleau d'enroulement 71 est monté dans un boîtier 72, qui n'est pas fixe, mais mobile, en rotation autour de l'axe du rouleau d'enroulement. On notera que l'on s'inspire ici du mode de réalisation de la figure 5, mais qu'il est aisé de tenir le même raisonnement avec d'autres modes de réalisation, et notamment celui de la figure 6.

Un logement 73 est prévu, sur les bords du boîtier (par exemple dans les bouchons 79), à l'intérieur duquel vient se loger la barre de tirage 74, après avoir traversé la fente de guidage 711 ménagée dans le support 712. Lors du repliement, la toile s'enroule autour du tube 71 (flèches 76), jusqu'à ce que la patte de tirage 77 s'immobilise dans la découpe 78 réalisée dans le revêtement.

Bien entendu, de nombreuses variantes et combinaisons de l'invention peuvent être envisagées. Notamment, on peut prévoir que l'entraînement du store soit motorisé (dans ce cas, il peut être dissimulé intégralement, la patte de tirage n'étant plus nécessaire). Il est également possible que le store ne soit pas à enrouleur, mais pliant, ou autre.

Les moyens d'entraînement ne comprennent pas nécessairement une barre de tirage, et peuvent être constitués de tout moyen adéquat (piston(s) par exemple). En outre, on peut prévoir des moyens déportés, pour transmettre le mouvement de ces moyens d'entraînement aux moyens d'obturation (par exemple une simple extension ou prolongement, ou une biellette, ou une crémaillère,...).

## Revendications

1. Store pour véhicule, comprenant une toile (53, 74) d'occultation mobile, sous l'action de moyens d'entraînement (55, 74), entre une position repliée et une position déployée, ledit store étant monté sous un élément dudit véhicule formant support, ladite toile (53) pouvant circuler, au travers d'une fente (53, 711) ménagée à cet effet dans ledit élément de structure (52),
**caractérisé en ce que** lesdits moyens d'entraînement (55, 74) de la toile (53) agissent également sur des moyens d'obturation (56, 61, 72) de ladite fente (59, 711) comprenant au moins un élément mobile s'étendant sous, ou à l'intérieur de, l'élément formant support (712) et pouvant prendre au moins deux positions :
- une position d'obturation, dans laquelle ils obturent au moins partiellement ladite fente (59, 711) et dissimulent au moins partiellement lesdits moyens d'entraînement ; et
- une position ouverte, permettant la circulation de ladite toile (53) dans ladite fente (59, 711),
lesdits moyens d'entraînement (55, 74) de la toile (53) étant conçus de façon que, lors du repliement de ladite toile, ils pénètrent au moins partiellement à l'intérieur dudit élément support (712) et ramènent ledit élément mobile dans ladite position d'obturation.

2. Store pour véhicule selon la revendication 1, **caractérisé en ce que** ledit élément mobile présente un logement de réception (73, 611, 58) desdits moyens d'entraînement, la présence desdits moyens d'entraînement dans ledit logement assurant le passage dans ladite position d'obturation.

3. Store pour véhicule selon l'une quelconque des revendications 1 et 2, **caractérisé en ce que**, en position d'obturation, au moins un élément de préhension (54, 77) reste accessible, de façon à pouvoir déployer ledit store.

4. Store pour véhicule selon la revendication 3, **caractérisé en ce que** ladite fente (59, 711) présente une découpe (78) ou un logement prévu pour recevoir ledit élément de préhension (54, 77).

5. Store pour véhicule selon l'une quelconque des revendications 1 à 4, **caractérisé** ledit élément mobile est monté à rotation sur un axe (57) s'étendant parallèlement à ladite fente (59, 711).

6. Store pour véhicule selon l'une quelconque des revendications 1 à 5, **caractérisé en ce que** ledit élément mobile est monté basculant autour d'un axe (62) s'étendant parallèlement à ladite fente (59, 711).

7. Store pour véhicule selon l'une quelconque des revendications 1 à 6, **caractérisé en ce qu'**il comprend un tube (71, 51) d'enroulement, sur lequel est monté ladite toile (53).

8. Store pour véhicule selon la revendication 7, **caractérisé en ce que** ledit tube d'enroulement (51) s'étend sensiblement à distance dudit élément mobile, à l'intérieur dudit élément de structure (52).

9. Store pour véhicule selon la revendication 7, **caractérisé en ce que** ledit tube d'enroulement (71) s'étend à l'intérieur dudit élément mobile (72).

10. Store pour véhicule selon la revendication 9, **caractérisé en ce que** l'axe dudit tube d'enroulement (71) est également l'axe autour duquel s'effectue le mouvement dudit élément mobile (72).

11. Store pour véhicule selon l'une quelconque des revendications 1 à 10, **caractérisé en ce que** lesdits moyens d'entraînement comprennent une barre de tirage (55, 74).

12. Store pour véhicule selon l'une quelconque des revendications 1 à 11, **caractérisé en ce que** le mouvement de ladite toile (53) est motorisé.

13. Portière (52) ou tablette arrière de véhicule, comprenant un store dont la toile (53) peut être déployée ou repliée au travers d'une fente (59, 711) ménagée à cet effet, sous l'action de moyens d'entraînement (55, 74),
**caractérisée en ce que** lesdits moyens d'entraînement (55, 74) agissent également sur des moyens d'obturation (56, 61, 72) de ladite fente (59, 711) comprenant au moins un élément mobile s'étendant sous, ou à l'intérieur de l'élément formant support (712), de façon que cette dernière soit au moins partiellement obturée lorsque ladite toile (53) repliée.

## Claims

1. Blind for a vehicle, comprising a shade cloth (53, 74) which can be moved, under the action of driving means (55, 74), between a rolled-up position and a deployed position, the said blind being mounted under an element of the said vehicle forming a support, the said cloth (53) being capable of running through a slot (59, 711) provided for that purpose in the said structural element (52),
**characterised in that** the said means (55, 74) for driving the cloth (53) also act on means (56, 61,72) for shading the said slot (59, 711) comprising at least one movable element extending under, or inside, the element (712) forming a support, and being capable of adopting at least two positions:
- an shading position in which they at least partly shade the said slot (59, 711) and at least partly hide the said driving means; and
- an open position which allows the running of the said cloth (53) within the said slot (59, 711),
the said means (55, 74) for driving the cloth (53) being designed in such a way that, when the said cloth is rolled up, they at least partly penetrate inside the said supporting element (712) and bring the said movable element back into the said shading position.

2. Blind for a vehicle according to Claim 1, **characterised in that** the said movable element has a housing (73, 611, 58) for receiving the said driving means, the presence of the said driving means in the said housing ensuring passage into the said shading position.

3. Blind for a vehicle according to any of Claims 1 and 2, **characterised in that**, in the shading position, at least one gripping element (54, 77) remains accessible, so that it is possible to deploy the said blind.

4. Blind for a vehicle according to Claim 3, **characterised in that** the said slot (59, 711) has a cutout (78) or a housing intended for receiving the said gripping element (54, 77).

5. Blind for a vehicle according to any of Claims 1 to 4, **characterised in that** the said movable element is mounted for rotation on an axis (57) extending parallel to the said slot (59, 711).

6. Blind for a vehicle according to any of Claims 1 to 5, **characterised in that** the said movable element is mounted so as to tilt about an axis (62) extending parallel to the said slot (59, 711).

7. Blind for a vehicle according to any of Claims 1 to 6, **characterised in that** it comprises a rolling-up tube (71, 51) on which the said cloth (53) is mounted.

8. Blind for a vehicle according to Claim 7, **characterised in that** the said rolling-up tube (51) extends substantially at a distance from the said movable element, inside the said structural element (52).

9. Blind for a vehicle according to Claim 7, **characterised in that** the said rolling-up tube (71) extends inside the said movable element (72).

10. Blind for a vehicle according to Claim 9, **characterised in that** the axis of the said rolling-up tube (71) is also the axis about which the movement of the said movable element (72) is carried out.

11. Blind for a vehicle according to any of Claims 1 to 10, **characterised in that** the said driving means comprise a draw-bar (55, 74).

12. Blind for a vehicle according to any of Claims 1 to 11, **characterised in that** the movement of the said cloth (53) is motor-driven.

13. Rear shelf or door (52) of a vehicle, comprising a blind whose cloth (53) can be deployed or rolled up through a slot (59, 711) provided for that purpose, under the action of driving means (55, 74),
**characterised in that** the said driving means (55, 74) also act on means (56, 61, 72) for shading the said slot (59, 711) comprising at least one movable element extending under, or inside, the element (712) forming a support, in such a way that the said slot is at least partly shaded when the said cloth (53) is rolled up.

## Patentansprüche

1. Rollo für Kraftfahrzeuge, das ein Rollotuch zum Verdecken (53, 74) umfasst, das unter der Einwirkung von Mitnahmemitteln (55, 74) zwischen einer aufwickelten und einer abwickelten Position beweglich ist, wobei das Rollo unter einem eine Stütze bildendes Element des Fahrzeugs angebracht ist, wobei das Rollotuch (53) durch einen zu diesem Zweck in dem Strukturelement (52) praktizierten Schlitz (59, 711) laufen kann,
**dadurch gekennzeichnet, dass** die Mitnahmemittel (55, 74) für das Rollotuch (53) ebenfalls auf Verschlussmittel (56, 61, 72) des besagten Schlitzes (59, 711) wirken, wobei diese Mitnahmemittel mindestens ein bewegliches Element umfassen, das sich unter oder innerhalb des eine Stütze bildenden Elementes (712) erstreckt, und wobei dieses Element mindestens zwei Positionen einnehmen kann:
- eine Verschlussposition, wobei sie den besagten Schlitz (59, 711) zumindest teilweise verschließen und die besagten Mitnahmemittel zumindest teilweise verdecken, und
- eine offene Position, die das Laufen der Stoffbahn (53) durch den Schlitz (59, 711) erlaubt,
wobei die Mitnahmemittel (55, 74) des Rollotuch (53) so konzipiert sind, dass sie beim Aufwickeln des Rollotuch zumindest teilweise in das Stützelement (712) eindringen und das bewegliche Element in die Verschlussposition zurückführen.

2. Rollo für Kraftfahrzeuge nach Anspruch 1,
**dadurch gekennzeichnet, dass** das besagt bewegliche Element ein Aufnahmegehäuse (73, 611, 58) für die besagten Mitnahmemittel aufweist, wobei das Vorhandensein dieser Mitnahmemittel in dem besagten Gehäuse den Übergang in die Verschlussposition sicherstellt.

3. Rollo für Kraftfahrzeuge nach einem der Ansprüche 1 oder 2,
**dadurch gekennzeichnet, dass** in der Verschlussposition mindestens ein Greifelement (54, 77) zugänglich bleibt, um das Rollo entfalten zu können.

4. Rollo für Kraftfahrzeuge nach Anspruch 3,
**dadurch gekennzeichnet, dass** der Schlitz (59, 711) einen Ausschnitt (78) oder ein Gehäuse zur Aufnahme des Greifelementes (54, 77) aufweist.

5. Rollo für Kraftfahrzeuge nach einem der Ansprüche 1 bis 4,
**dadurch gekennzeichnet, dass** das bewegliche Element drehend auf einer Achse (57) angebracht ist, die sich parallel zum Schlitz (59, 711) erstreckt.

6. Rollo für Kraftfahrzeuge nach einem der Ansprüche 1 bis 5,
**dadurch gekennzeichnet, dass** das bewegliche Element schwenkbar um eine Achse (62) angebracht ist, die sich parallel zum Schlitz (59, 711) erstreckt.

7. Rollo für Kraftfahrzeuge nach einem der Ansprüche 1 bis 6,
**dadurch gekennzeichnet, dass** es eine Aufrollwalze (71, 51) umfasst, auf welche die Stoffbahn (53) aufgebracht ist.

8. Rollo für Kraftfahrzeuge nach Anspruch 7,
**dadurch gekennzeichnet, dass** die Aufrollwalze (71, 51) sich in etwa in einer bestimmten Entfernung des beweglichen Elementes im Inneren des besagten Strukturelementes (52) erstreckt.

9. Rollo für Kraftfahrzeuge nach Anspruch 7,
**dadurch gekennzeichnet, dass** die erwähnte Aufrollwalze (71) sich im Inneren des beweglichen Elementes (72) erstreckt.

10. Rollo für Kraftfahrzeuge nach Anspruch 9,
**dadurch gekennzeichnet, dass** die Achse der Aufrollwalze (71) ebenfalls die Achse ist, um welche die Bewegung des beweglichen Elementes (72) stattfindet.

11. Rollo für Kraftfahrzeuge nach einem der Ansprüche 1 bis 10,
**dadurch gekennzeichnet, dass** die Mitnahmemittel eine Zugstange (55, 74) umfassen.

12. Rollo für Kraftfahrzeuge nach einem der Ansprüche 1 bis 11,
**dadurch gekennzeichnet, dass** die Bewegung des Rollotuch (53) motorisiert ist.

13. Tür (52) oder Hutablage für Kraftfahrzeuge, die ein Rollo umfasst, dessen Rollotuch (53) unter der Wirkung von Mitnahmemitteln (55, 74) durch einen zu diesem Zweck praktizierten Schlitz (59, 711) entfaltet oder zurückgefaltet werden kann,
**dadurch gekennzeichnet, dass** die Mitnahmemittel (55, 74) ebenfalls auf Verschlussmittel (56, 61, 72) des besagten Schlitzes einwirken, welche mindestens ein bewegliches Element aufweisen, das sich unterhalb oder innerhalb des eine Stützte bildenden Elementes (712) erstreckt, so dass der Schlitz zumindest teilweise verdeckt ist, wenn das Rollotuch (53) zurückgefaltet ist.
